# FASCICULE DE BREVET EUROPEEN

(11) **EP 1 108 580 B1**
(45) Date de publication et mention de la délivrance du brevet: **07.11.2007**
(21) Numéro de dépôt: 00403503.6
(22) Date de dépôt: 13.12.2000
(51) Int. Cl.: B60J 5/10

(54) **Hayon de véhicule automobile**
Heckklappe für ein Motorfahrzeug
Tailgate for motor vehicle

(30) Priorité: 15.12.1999 FR 9915846
(43) Date de publication de la demande: 20.06.2001
(73) Titulaire: COMPAGNIE PLASTIC OMNIUM, 69007 Lyon (FR)
(72) Inventeur: Decker, Laurent, 92100 Boulogne Billancourt (FR); Delavalle, Dominique, 01100 Marchon (FR); Pommeret, Maëlig, 01100 Oyonnax (FR)
(74) Mandataire: Remy, Vincent Noel Paul

(56) Documents cités:
- DE-C- 4 103 651
- FR-A- 2 684 347
- FR-A- 2 699 867
- FR-A- 2 748 969
- US-A- 3 612 601
- US-A- 3 749 440

## Description

La présente invention concerne un hayon de véhicule automobile, et plus particulièrement un hayon destiné à être monté sur des charnières situées le long de son bord horizontal inférieur, pour pivoter autour de ce bord horizontal entre une position fermée sensiblement verticale et une position ouverte sensiblement horizontale.

En position ouverte, le hayon prolonge le plancher du coffre du véhicule, afin d'en faciliter le chargement.

Le pivotement d'un tel hayon nécessite de laisser libre un espace permettant son débattement angulaire à l'arrière du véhicule.

En particulier, sauf à faire dépasser le hayon au-delà du pare-chocs vers l'arrière du véhicule, il est nécessaire de positionner le pare-chocs suffisamment bas par rapport au hayon fermé pour laisser, entre le plancher du coffre et le pare-chocs, une hauteur libre suffisante correspondant sensiblement à l'épaisseur du hayon.

Cela constitue une contrainte esthétique que la présente invention vise à supprimer.

De plus, étant donné que le pare-chocs ne peut pas être positionné trop bas compte tenu de sa fonction essentielle de protection, le plancher du coffre est souvent artificiellement surélevé pour atteindre le niveau de la face interne du hayon ouvert, ce qui occasionne une perte de volume du coffre.

FR 2 748 969 décrit un hayon de véhicule automobile destiné à être monté pivotant sur un véhicule autour de charnières situées à proximité d'un de ses bords, le hayon étant constitué par un panneau principal solidaire des charnières et par un panneau secondaire qui est mobile par rapport au panneau principal entre une position de fermeture dans laquelle il se superpose au panneau principal et une position d'ouverture dans laquelle il est séparé du panneau principal, le panneau principal comprenant une partie dont l'épaisseur correspond à l'épaisseur totale du hayon.

La présente invention a pour objet un hayon de véhicule automobile selon la revendication 1.

Cette partie "amincie" du hayon nécessite autour d'elle un dégagement moindre, pour le débattement angulaire du hayon, que si ce dernier conservait son épaisseur initiale au moment de son ouverture.

L'invention permet ainsi de rapprocher le plancher du coffre du pare-chocs arrière, lorsqu'il s'agit d'un hayon pivotant autour de son bord horizontal inférieur, car la distance minimale entre le plancher du coffre et le pare-chocs est l'épaisseur du seul panneau principal, et non celle du hayon en totalité.

Dans un mode de réalisation particulier de l'invention, le panneau secondaire du hayon est situé sur la face externe du hayon.

Dans un mode de réalisation particulier, le panneau secondaire est monté pivotant par rapport au panneau principal autour d'un axe situé, par rapport au panneau secondaire, à l'opposé des charnières du hayon.

Dans ce mode de réalisation, le panneau secondaire peut s'orienter perpendiculairement au hayon en position d'ouverture.

Etant donné que le hayon ouvert est en général horizontal, le panneau pivotant perpendiculaire au hayon ouvert est vertical.

Le panneau secondaire peut alors servir de support pour un dispositif d'optique de signalisation et/ou de plaque de police avec éventuellement un éclairage, ce qui permet au véhicule d'être utilisé hayon ouvert tout en respectant les règles en vigueur.

Dans un autre mode de réalisation, le panneau secondaire peut être détaché du panneau principal.

Dans une variante avantageuse, le panneau secondaire détaché du panneau principal peut être re-fixé en un autre point du hayon.

Par exemple, le panneau secondaire peut être fixé perpendiculairement au hayon à son point situé le plus en arrière du véhicule, afin de servir de support d'optique ou de plaque de police, tout en matérialisant l'extrémité arrière du véhicule qui est constituée par le bord d'extrémité du hayon opposé à ses charnières.

Le panneau secondaire ainsi fixé au point le plus en arrière du véhicule sert en outre de pare-chocs pour des chocs à faible énergie, ce qui protège le bord du hayon opposé à ses charnières, qui est particulièrement vulnérable si le véhicule est utilisé hayon ouvert.

Dans un mode de réalisation particulier de l'invention, un mécanisme de verrouillage retient le panneau secondaire en position de fermeture contre le panneau principal.

Dans une variante avantageuse, ce dispositif de verrouillage est accouplé à la commande de serrure du hayon de manière que le panneau secondaire passe de sa position de fermeture à sa position d'ouverture au moment de l'ouverture du hayon.

Dans un autre mode de réalisation, un mécanisme de synchronisation bascule le panneau secondaire en position d'ouverture, lorsque le hayon pivote en position ouverte, et inversement.

Avantageusement, le panneau secondaire constitue une zone fusible du hayon.

Dans le but de mieux faire comprendre l'invention, on va en décrire maintenant un mode de réalisation donné à titre d'exemple non limitatif, en référence au dessin annexé, dans lequel :
- la figure 1 est une section transversale selon un plan vertical de l'extrémité arrière d'un véhicule,
- la figure 2 est une vue analogue à la figure 1 après pivotement du hayon,
- la figure 3 est une vue analogue à la figure 2 montrant une variante du panneau secondaire,
- la figure 4 est une vue en perspective de trois quarts arrière du véhicule,
- les figures 5a et 5b sont des vues schématiques à plus grande échelle d'un mécanisme d'asservissement du panneau secondaire à l'ouverture du hayon, avant et après pivotement de ce dernier,
- les figures 6a et 6b sont des vues analogues aux figures 5a et 5b d'un autre mécanisme d'asservissement,
- les figures 7a et 7b sont des vues analogues aux figures 5a et 5b d'un autre mécanisme d'asservissement,
- la figure 8 est une vue éclatée de l'arrière du véhicule, avec le mécanisme d'asservissement de la figure 5.

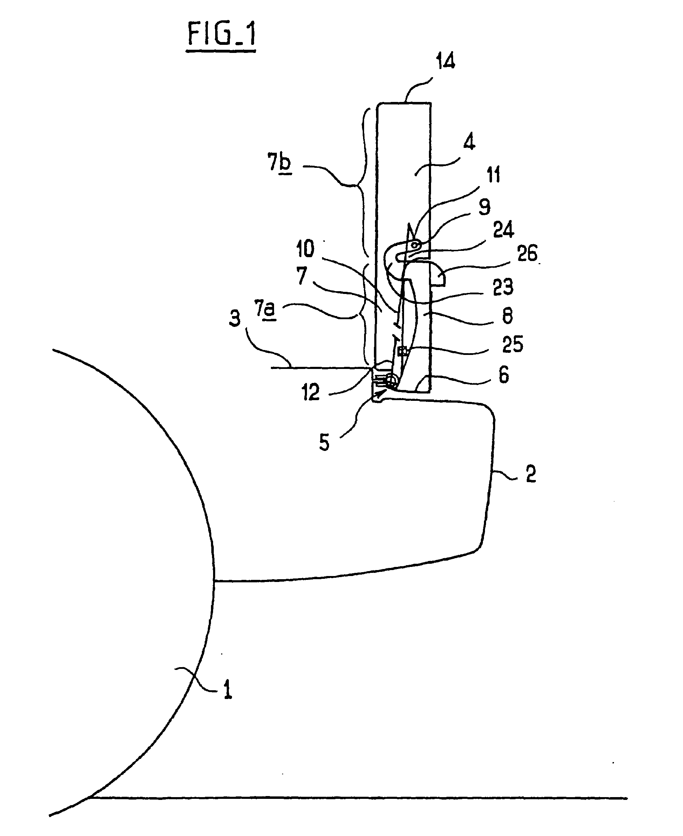

Sur les figures 1, 2 et 3, on voit la roue arrière gauche 1 d'un véhicule ainsi que son pare-chocs arrière 2 et le plancher 3 du compartiment à bagages ou coffre du véhicule.

Ce coffre est obturé par un hayon 4 monté pivotant sur le véhicule autour de charnières 5 situées le long de son bord horizontal inférieur 6.

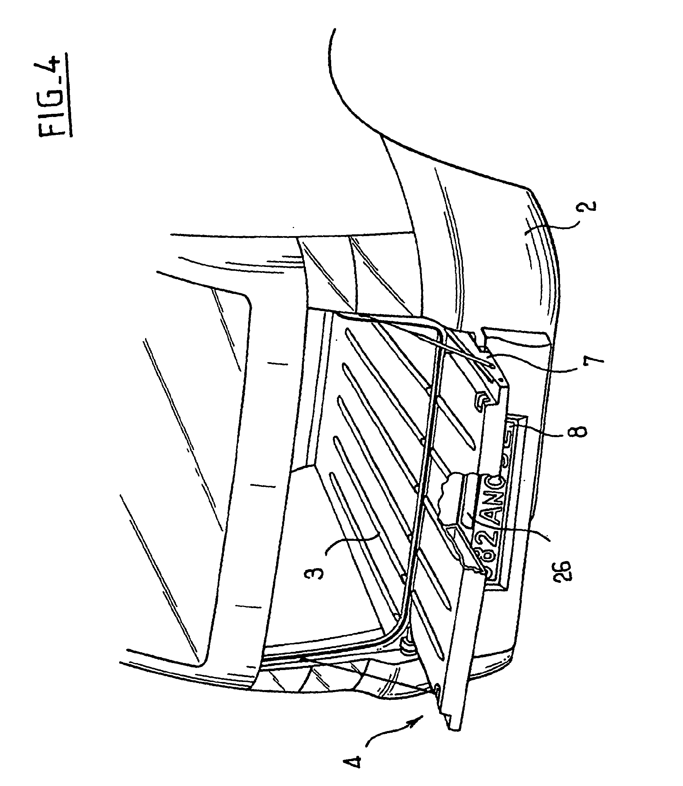

Le hayon 4 est schématisé sur les figures 1 à 3. Sa forme extérieure est détaillée sur la figure 4.

Le hayon est constitué par un panneau interne 7 qui constitue, au sens de l'invention, le panneau principal du hayon.

Ce panneau interne 7 s'étend sur toute la surface du hayon depuis ses charnières jusqu'à son bord horizontal supérieur opposé aux charnières. Il forme toute la face interne du hayon.

Ce panneau principal 7 comprend une partie 7a, voisine des charnières, d'épaisseur réduite et une partie complémentaire 7b, éloignée des charnières, dont l'épaisseur correspond à l'épaisseur totale du hayon. Dans cette deuxième partie, le panneau principal 7 constitue le hayon 4 à lui seul.

Dans la première partie 7a de moindre épaisseur, le panneau principal ne constitue qu'une moitié du hayon, l'autre moitié étant formée par un panneau secondaire 8 qui vient prendre place dans l'évidement laissé par le panneau principal du fait de sa réduction d'épaisseur entre sa partie 7a voisine des charnières et sa partie 7b éloignée des charnières.

Le panneau secondaire 8 est monté pivotant sur le panneau principal 7 autour d'un axe 9 parallèle à l'axe défini par les charnières 5.

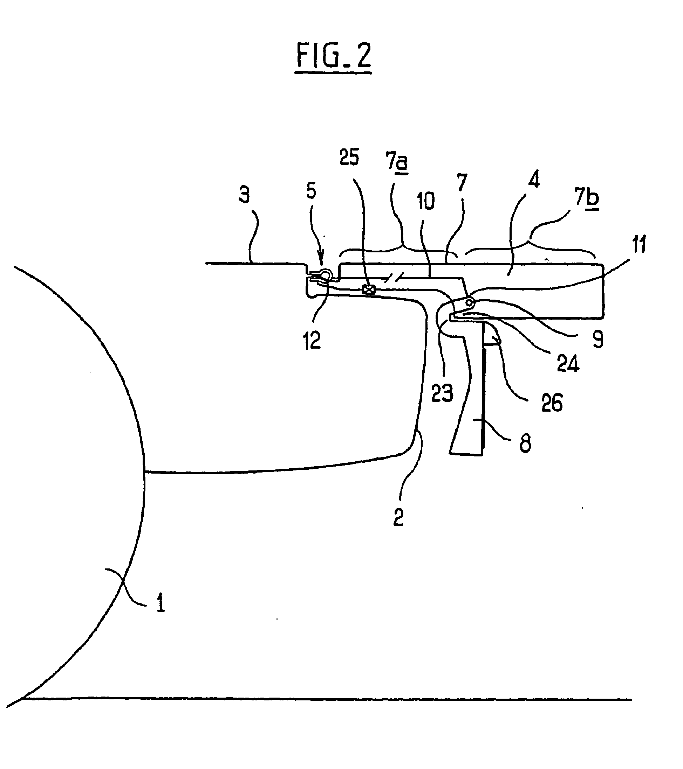

Comme on le voit à la figure 2, lorsque le hayon 4 se trouve en position ouverte, le panneau secondaire 8 a pivoté en position d'ouverture dans laquelle il s'étend perpendiculairement au hayon, c'est-à-dire verticalement.

Ce pivotement du panneau secondaire 8 l'éloigne du panneau principal 7, de sorte que le hayon ne présente plus, au voisinage de ses charnières 5, qu'une épaisseur réduite correspondant à l'épaisseur du seul panneau principal 7, l'espace libre ainsi dégagé permettant au hayon de se débattre angulairement sans toucher le pare-chocs 2 qui se trouve en dessous de ses charnières 5.

De cette façon, on peut positionner le pare-chocs assez haut à l'arrière du véhicule.

Réciproquement, on peut, pour une hauteur de pare-chocs donnée, abaisser le plancher du compartiment à bagages du véhicule, tout en le maintenant à la même hauteur que la face interne du hayon en position ouverte, ce qui procure un gain de place dans le compartiment à bagages.

Le panneau secondaire 8 est relié aux charnières 5 du hayon 4 par un mécanisme de synchronisation ou d'asservissement qui exerce sur le panneau secondaire un couple de rotation destiné à le maintenir en position verticale, tandis que le hayon passe de sa position verticale fermée à sa position horizontale ouverte.

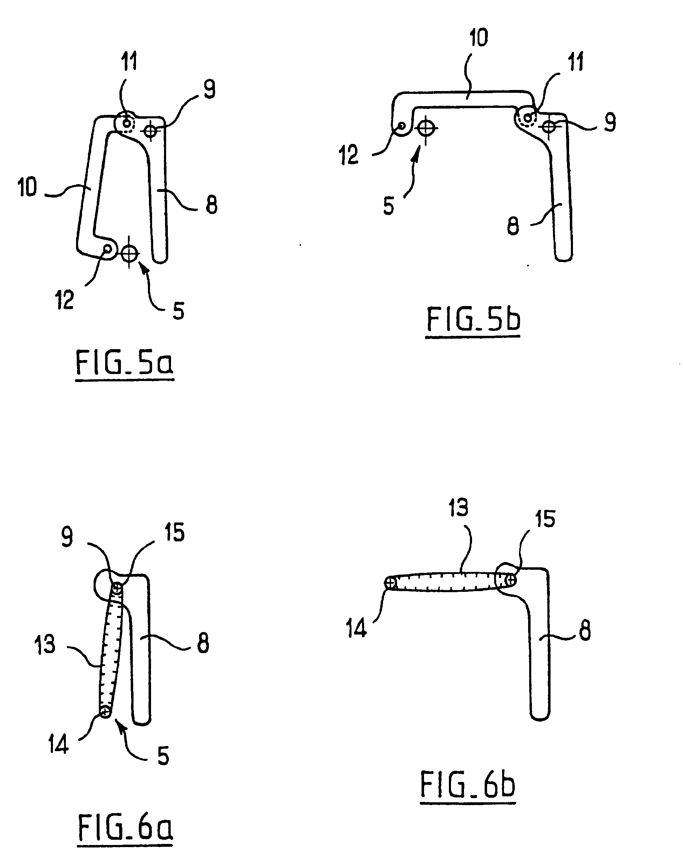

Comme on le voit à la figure 5a, ce mécanisme de synchronisation peut être constitué par une biellette 10 qui, sur le principe du parallélogramme déformable, maintient un point 11 du panneau secondaire éloigné de son axe à égale distance d'un point 12 de la charnière éloignée de son axe.

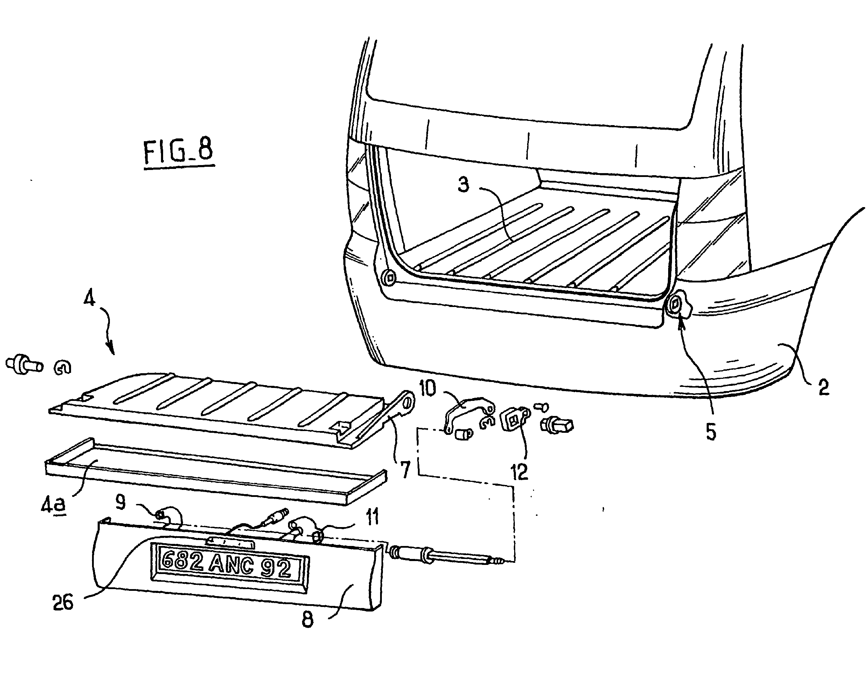

Les différentes pièces de ce mécanisme sont également visibles à la figure 8, qui montre également un panneau extérieur 4a, du hayon.

Dans une variante non représentée, le mécanisme de synchronisation pourrait être constitué par un système de déverrouillage libérant le panneau secondaire, lequel, sous l'action d'un ressort, se placerait immédiatement en position d'ouverture dès le début du pivotement du hayon.

Dans la variante de la figure 6a, le mécanisme de synchronisation comporte une courroie crantée 13 reliant une roue crantée fixe 14, solidaire du véhicule au niveau des charnières mais ne pivotant pas avec le hayon, à une roue crantée 15 située au niveau de l'axe 9 du panneau secondaire et solidaire de ce panneau secondaire.

On comprend qu'au moment du pivotement du hayon, la courroie crantée 13 empêche la roue crantée 15 de changer d'orientation, de sorte que le panneau secondaire demeure vertical.

Il se trouve donc dans la position de la figure 6b lorsque le hayon a atteint sa position ouverte.

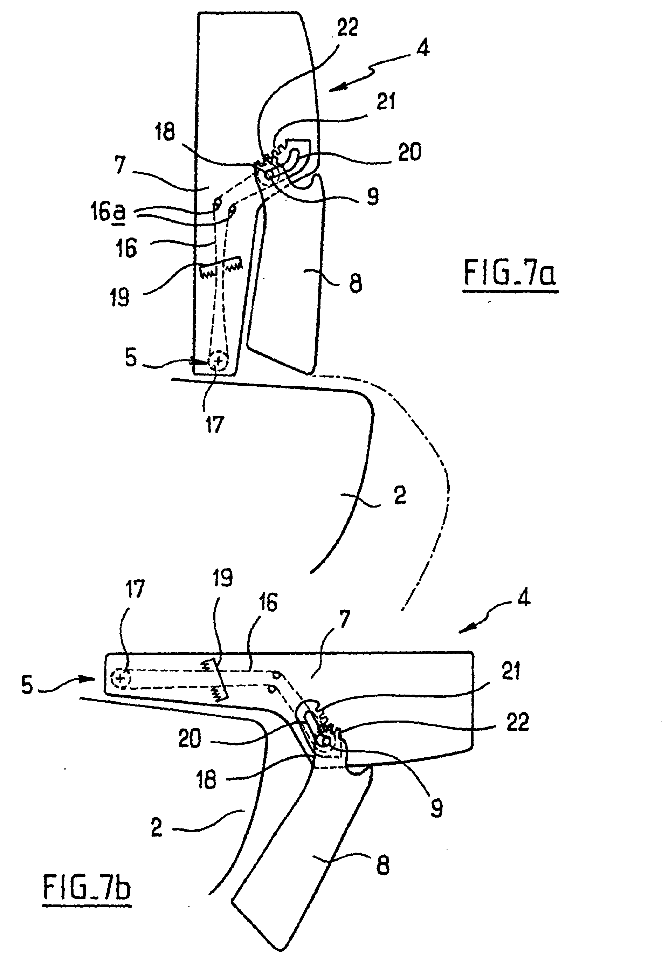

Dans la variante des figures 7a et 7b, on retrouve une courroie 16 reliant une roue fixe 17 solidaire du véhicule au niveau des charnières à une roue 18 solidaire du panneau secondaire, par l'intermédiaire de renvois 16a qui maintiennent la courroie à l'intérieur du panneau principal 7.

Comme précédemment expliqué, la courroie 16 conserve au panneau secondaire son orientation verticale initiale.

Des tendeurs de courroie 19 sont logés de part et d'autre de celle-ci, de façon à lui permettre de s'adapter à un allongement de la distance séparant les deux roues 17 et 18.

L'axe 9 du panneau secondaire (correspondant à la roue 18 sur la figure) est monté sur le panneau principal 7 dans une fente 20 dans laquelle ledit axe 9 peut évoluer.

L'un des bords longitudinaux de la fente 20 est découpé en une crémaillère 21, tandis que la roue 18 solidaire du panneau secondaire comporte un secteur denté 22 qui engrène avec cette crémaillère.

Le fonctionnement du mécanisme de synchronisation est le suivant.

Lorsque le hayon passe en position ouverte, il pivote autour de ses charnières 5.

Du fait de la présence de la courroie 16, le panneau secondaire demeure vertical, comme dans la variante de la figure 6, ce qui l'écarte du panneau principal.

Il se produit simultanément un pivotement relatif du secteur denté 22, qui garde son orientation initiale, par rapport à la crémaillère 21 qui tourne avec le hayon.

De ce fait, l'axe 9 du panneau se déplace dans la fente 20 sous l'action de la crémaillère.

La forme de la fente 20 (oblique lorsque le hayon est fermé, comme on le voit à la figure 7a) a pour conséquence que le déplacement de l'axe 9 entraîne son éloignement des charnières 5.

Cet éloignement a pour effet de remonter le panneau secondaire par rapport au hayon au début du pivotement de ce dernier, ce qui permet de compenser la descente du hayon due à son ouverture.

Le parcours du point le plus bas du panneau secondaire est représenté en traits interrompus sur la figure 7a.

On voit que le panneau secondaire peut demeurer à une altitude sensiblement constante pendant une première phase du pivotement du hayon, jusqu'à ce qu'il ait dépassé l'extrémité arrière du pare-chocs, après quoi il peut descendre au-delà du pare-chocs, comme on le voit à la figure 7b.

Cette variante du mécanisme de synchronisation autorise dont le maintien d'un pare-chocs proéminent relativement haut en arrière du hayon.

En choisissant une forme de fente 20 adéquate, on pourrait même amorcer le pivotement du hayon en faisant remonter le panneau secondaire, pour lui permettre de contourner un pare-chocs remontant, par exemple en becquet.

On voit, notamment sur la figure 2, que le panneau secondaire est relié à son axe d'articulation sur le panneau principal par des bras courbes 23 qui ont pour but de contourner une visière 24 masquant l'axe 9 d'articulation du panneau secondaire lorsque le hayon est en position fermée.

Comme représenté aux figures 1 et 2, un verrou 25 peut assurer le maintien du panneau secondaire 8 contre le panneau principal 7 en position de fermeture, afin de soulager le mécanisme de synchronisation qui n'entre en fonction qu'au moment du pivotement du hayon, sans avoir à maintenir les deux panneaux collés l'un contre l'autre lorsque le hayon est fermé.

Pour le passage en position ouverte, le verrou 25 est ouvert au début du pivotement du hayon, par exemple sous l'action de la commande de serrure du hayon.

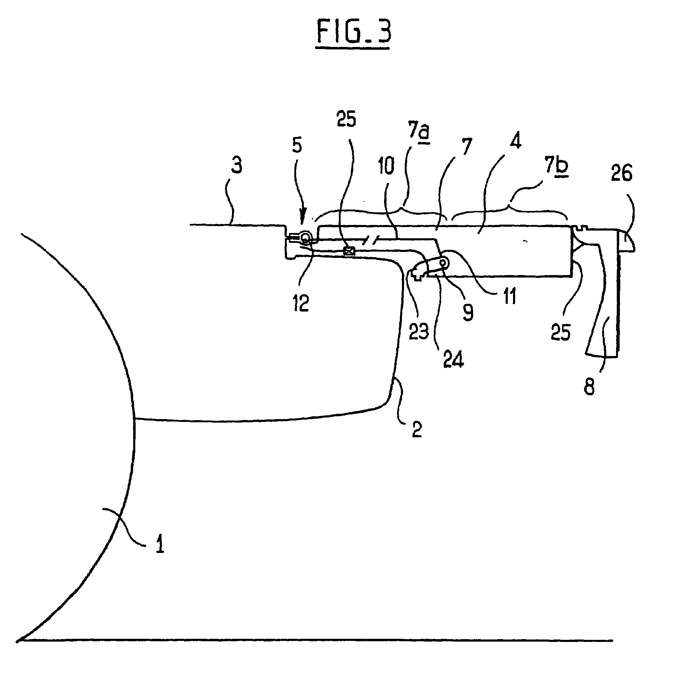

Dans la variante représentée à la figure 3, le panneau secondaire 8 est dissociable de ses bras courbes 23, de manière à pouvoir être fixé à l'extrémité arrière du hayon en position ouverte, c'est-à-dire sur son bord 25 opposé à ses charnières, afin de matérialiser l'extrémité arrière du véhicule.

De cette manière, le véhicule peut être utilisé hayon ouvert pour transporter des objets longs.

Le panneau secondaire 8 peut supporter la plaque minéralogique ou plaque de police du véhicule, ainsi que l'éclaireur 26 de cette plaque.

Lorsque le panneau secondaire 8 est fixé à l'extrémité arrière du hayon, on positionne la fixation de préférence au point le plus haut du hayon, de manière à accroître la garde au sol à l'arrière du véhicule.

Il est intéressant de relever que le hayon selon l'invention remplit parfaitement son rôle traditionnel d'obturation du compartiment à bagages du fait qu'en position fermée, il présente une épaisseur constante correspondant à l'épaisseur normale d'un hayon.

En outre, le panneau secondaire constitue une zone fusible du hayon qui peut, en cas de choc peu important, être la seule endommagée et donc la seule à remplacer, ce qui est économiquement intéressant.

## Revendications

1. Hayon (4) de véhicule automobile destiné à être monté pivotant sur un véhicule autour de charnières (5) situées à proximité d'un de ses bords (6), le hayon étant constitué au voisinage de ses charnières (5), par un panneau principal (7) solidaire des charnières (5) et par un panneau secondaire (8) qui est mobile par rapport au panneau principal entre une position de fermeture dans laquelle il se superpose au panneau principal pour reconstituer le hayon dans toute son épaisseur et une position d'ouverture dans laquelle il est séparé du panneau principal, ce dernier ne formant alors qu'une partie d'épaisseur réduite du hayon le panneau principal (7) comprenant une partie (7b) dont l'épaisseur correspond à l'épaisseur totale du hayon.

2. Hayon selon la revendication 1, **caractérisé par le fait que** le panneau secondaire (8) est situé sur la face externe du hayon.

3. Hayon selon l'une quelconque des revendications 1 et 2, **caractérisé par le fait que** le panneau secondaire (8) est monté pivotant par rapport au panneau principal (7) autour d'un axe (9) situé, par rapport au panneau secondaire, à l'opposé des charnières (5) du hayon.

4. Hayon selon l'une quelconque des revendications 1 à 3, **caractérisé par le fait que** le panneau secondaire (8) peut s'orienter perpendiculairement au hayon en position d'ouverture.

5. Hayon selon l'une quelconque des revendications 1 à 4, **caractérisé par le fait que** le panneau secondaire (8) peut être détaché du panneau principal (7).

6. Hayon selon la revendication 5, **caractérisé par le fait que** le panneau secondaire (8) détaché du panneau principal peut être re-fixé en un autre point du hayon.

7. Hayon selon l'une quelconque des revendications 1 à 6, **caractérisé par le fait qu'**un mécanisme de verrouillage (25) retient le panneau secondaire (8) en position de fermeture contre le panneau principal (7).

8. Hayon selon la revendication 7, **caractérisé par le fait que** le dispositif de verrouillage est accouplé à la commande de serrure du hayon de manière que le panneau secondaire passe de sa position de fermeture à sa position d'ouverture au moment de l'ouverture du hayon.

9. Hayon selon l'une quelconque des revendications 1 à 6, **caractérisé par le fait qu'**il comporte un mécanisme de synchronisation qui bascule le panneau secondaire (8) en position d'ouverture lorsque le hayon pivote en position ouverte, et inversement.

10. Hayon selon l'une quelconque des revendications 1 à 9, **caractérisé par le fait que** le panneau secondaire (8) constitue une zone fusible du hayon.

## Claims

1. A motor vehicle tailgate (4) designed to be pivottaly mounted to a vehicle about hinges (5) situated close to one of its edges (6), the tailgate being constituted in the vicinity of its hinges (5) by a main panel (7) secured to the hinges (5) and by a secondary panel (8) which is movable relative to the main panel between a closed position in which it is superposed on the main pane so as to reconstitute a tailgate of full thickness, and an open position in which it is separated from the main panel, with the main panel then constituting a portion of the tailgate of reduced thickness, the main panel (7) comprising a part (7b) whose thickness corresponds to the full thickness of the tailgate.

2. A tailgate according to claim 1, wherein the secondary panel (8) is situated on the outside face of the tailgate.

3. A tailgate according to any one of claims 1 or 2, wherein the secondary panel (8) is mounted to pivot relative to the main panel (7) about an axis (9) which is situated, relative to the secondary panel, remote from the hinges (5) of the tailgate.

4. A tailgate according to any one of claims 1 to 3, wherein the secondary panel (8) can extend perpendicularly to the tailgate in its open position.

5. A tailgate according to any one of claims 1 to 4, wherein the secondary panel (8) can be detached from the main panel (7).

6. A tailgate according to claim 5, wherein the secondary panel (8) when detached from the main panel can be fixed back on the tailgate at some other point.

7. A tailgate according to any one of claims 1 to 6, wherein a latching mechanism (25) holds the secondary panel (8) in its closed position against the main panel (7).

8. A tailgate according to claim 7, wherein the latching mechanism is coupled to the control of a lock for the tailgate so that the secondary panel passes from its closed position to its open position when the tailgate is opened.

9. A tailgate according to any one of claims 1 to 6, including a synchronization mechanism which tilts the secondary panel (8) into its open position while the tailgate is pivoting into its open position, and vide versa.

10. A tailgate according to any one of claims 1 to 9, wherein the secondary panel (8) constitutes a fusible zone of the tailgate.

## Patentansprüche

1. Heckklappe (4) eines Kraftfahrzeugs, die zur schwenkbaren Befestigung an einem Fahrzeug um Scharniere (5) herum vorgesehen ist, welche sich nahe eines ihrer Ränder (6) befinden, wobei die Heckklappe in der Nähe ihrer Scharniere aus einer Hauptplatte (7) besteht, die mit den Scharnieren (5) ein Teil bildet, und aus einer Sekundärplatte (8), die in Bezug auf die Hauptplatte zwischen einer Schließposition, in der sie auf der Hauptplatte zu liegen kommt, damit die Hecklappe wieder ihre gesamte Breite einnimmt, und einer Offenposition beweglich ist, in der sie von der Hauptplatte getrennt ist, wobei letztere dann lediglich ein Teil mit einer geringeren Breite der Heckklappe darstellt, wobei die Hauptplatte (7) ein Abschnitt (7b) umfasst, dessen Dicke der Gesamtdicke der Heckklappe entspricht.

2. Heckklappe nach Anspruch 1, **dadurch gekennzeichnet, dass** die Sekundärplatte (8) auf der Außenfläche der Heckklappe aufsitzt.

3. Heckklappe nach einem der Ansprüche 1 und 2, **dadurch gekennzeichnet, dass** die Sekundärplatte (8) in Bezug auf die Hauptplatte (7) schwenkbar um eine Achse (9) angeordnet ist, die sich in Bezug auf die Sekundärplatte den Scharnieren (5) der Heckklappe gegenüber befindet.

4. Heckklappe nach einem der Ansprüche 1 bis 3, **dadurch gekennzeichnet, dass** sich die Sekundärklappe (8) in der Offenposition senkrecht an der Heckklappe ausrichten kann.

5. Heckklappe nach einem der Ansprüche 1 bis 4, **dadurch gekennzeichnet, dass** die Sekundärplatte (8) von der Hauptplatte (7) abgenommen werden kann.

6. Heckklappe nach Anspruch 5, **dadurch gekennzeichnet, dass** die von der Hauptplatte abgenommene Sekundärplatte (8) an einem anderen Punkt der Hauptplatte wieder angebracht werden kann.

7. Heckklappe nach einem der Ansprüche 1 bis 6, **dadurch gekennzeichnet, dass** die Sekundärplatte (8) durch einen Verriegelungsmechanismus (25) in der Schließposition gegen die Hauptplatte gehalten wird.

8. Heckklappe nach Anspruch 7, **dadurch gekennzeichnet, dass** die Verriegelungsvorrichtung derart mit der Schlosssteuerung der Heckklappe gekoppelt ist, dass die Sekundärplatte im Moment des Öffnens der Heckklappe aus ihrer Schließposition in ihre Offenposition wechselt.

9. Heckklappe nach einem der Ansprüche 1 bis 6, **dadurch gekennzeichnet, dass** sie einen Synchronisierungsmechanismus aufweist, der die Sekundärplatte (8) in die Offenposition klappt, wenn die Heckklappe in die Offenposition schwenkt, und umgekehrt.

10. Heckklappe nach einem der Ansprüche 1 bis 9, **dadurch gekennzeichnet, dass** die Sekundärplatte eine Sollbruchstelle der Heckklappe darstellt.
